(19) **Europäisches Patentamt / European Patent Office / Office européen des brevets**

(11) **EP 4 070 278 B1**

(12) **EUROPEAN PATENT SPECIFICATION**

(45) Date of publication and mention of the grant of the patent:
**18.03.2026 Bulletin 2026/12**

(21) Application number: **20830359.4**

(22) Date of filing: **19.11.2020**

(51) International Patent Classification (IPC):
**G06T 7/593** *(2017.01)*

(52) Cooperative Patent Classification (CPC):
**G06T 7/593;** G06T 2207/20081; G06T 2207/20084

(86) International application number:
**PCT/IT2020/050288**

(87) International publication number:
**WO 2021/111482 (10.06.2021 Gazette 2021/23)**

(54) **METHOD TO DETERMINE THE DEPTH FROM IMAGES BY SELF-ADAPTIVE LEARNING OF A NEURAL NETWORK AND SYSTEM THEREOF**

VERFAHREN ZUR BESTIMMUNG DER TIEFE VON BILDERN DURCH SELBSTADAPTIVES LERNEN EINES NEURONALEN NETZES UND SYSTEM DAFÜR

PROCÉDÉ PERMETTANT DE DÉTERMINER LA PROFONDEUR À PARTIR D'IMAGES PAR APPRENTISSAGE AUTO-ADAPTATIF D'UN RÉSEAU NEURONAL ET SYSTÈME ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2019 IT 201900022707**

(43) Date of publication of application:
**12.10.2022 Bulletin 2022/41**

(73) Proprietor: **Alma Mater Studiorum - Università di Bologna**
**40126 Bologna (IT)**

(72) Inventors:
• **POGGI, Matteo**
  40126 BOLOGNA (IT)
• **TOSI, Fabio**
  40126 BOLOGNA (IT)
• **MATTOCCIA, Stefano**
  40126 BOLOGNA (IT)
• **DI STEFANO, Luigi**
  40126 BOLOGNA (IT)
• **TONIONI, Alessio**
  40126 BOLOGNA (IT)

(74) Representative: **Tiburzi, Andrea et al**
**Barzanò & Zanardo Roma S.p.A.**
**Via Piemonte 26**
**00187 Roma (IT)**

(56) References cited:
WO-A1-2018/046964    CN-A- 110 021 043
US-A1- 2018 059 679    US-A1- 2019 295 282
US-A1- 2019 362 514

• POGGI MATTEO ET AL: "Guided Stereo Matching", 2019 IEEE/CVF CONFERENCE ON COMPUTER VISION AND PATTERN RECOGNITION (CVPR), IEEE, 15 June 2019 (2019-06-15), pages 979 - 988, XP033687107, DOI: 10.1109/CVPR.2019.00107
• CHENG FEIYANG ET AL: "Learning to refine depth for robust stereo estimation", PATTERN RECOGNITION, vol. 74, 2018, pages 122 - 133, XP085273123, ISSN: 0031-3203, DOI: 10.1016/J.PATCOG.2017.07.027
• MAO WENDONG ET AL: "Disparity Filtering with 3D Convolutional Neural Networks", 2018 15TH CONFERENCE ON COMPUTER AND ROBOT VISION (CRV), IEEE, 8 May 2018 (2018-05-08), pages 246 - 253, XP033475201, DOI: 10.1109/CRV.2018.00042

- **FERRERA MAXIME ET AL: "Fast Stereo Disparity Maps Refinement By Fusion of Data-Based And Model-Based Estimations", 2019 INTERNATIONAL CONFERENCE ON 3D VISION (3DV), IEEE, 16 September 2019 (2019-09-16), pages 9 - 17, XP033653360, DOI: 10.1109/ 3DV.2019.00011**

## Description

The present invention relates to a method to determine the depth from images by self-adaptive learning of a neural network and system thereof.

## Field of the invention

More specifically, the invention relates to a method and a system of the above type, studied and realized in particular for determining the depth of the points of a scene from digital images, capable of increasing the accuracy in the generation of depth maps.

In the following, the description will be directed to the determination of the depth from images acquired through a stereoscopic system, but it is clear that the same should not be considered limited to this specific use.

## Prior art

As is known, the point-to-point determination of depth from a digital image currently represents a problem of considerable interest in various sectors such as, for example, the automotive sector or the computer vision sector.

The information on the depth of the observed points is a fundamental element, and in some cases essential, in applications such as, for example, autonomous or assisted driving, 3D reconstruction starting from two-dimensional images, or augmented reality.

The depth (from the English "depth") estimate of the points of a scene of an image can be obtained, using different methodologies, starting from one or more images.

Currently, one of the most used techniques to estimate this depth is the stereoscopic vision (from the English "stereo vision").

This technique provides for the presence of two cameras positioned at a certain distance between them, on the same horizontal axis or baseline, and capable of capturing respective images depicting the same observed scene. Thus, stereoscopic vision allows simulating a simplified human visual system.

More specifically, this configuration allows estimating the depth of the scene observed by the two cameras by the processing of the two images (the reference image or "reference" image and the target or "target"), exploiting the particular geometry of the stereoscopic system, i.e. the so-called epipolar geometry.

In particular, to achieve this result, it is necessary to identify the correspondences between the pixels in the two images. This can be done by considering, for each pixel in the reference image, all the possible match hypotheses by comparing it with the pixels of the target image.

Once the corresponding pixel has been found, a disparity map can easily be obtained, since a disparity value is associated with each pixel of the reference image, which indicates the distance of each pixel from the corresponding pixel.

In particular, by construction, applying known calibration and rectification techniques ([1], [2]), a point that in the reference image is at the coordinates (x, y), in the target image will be in position (x-d, y), in which d indicates the difference to be estimated, called disparity. In this specific case, the disparity is a horizontal disparity. In fact, the vertical disparity is zero, due, as mentioned, to the alignment of the two cameras by known techniques (examples in [1], [2]) and, therefore, to the two optical centers.

Therefore, by defining, for example, a maximum range [0: D], in which searching for the correspondences between the pixels in the two images, appropriate scores will be calculated between each pixel in the reference image and the possible couplings or matches (x-0, y )... (x-D, y) in the target image.

Therefore, each score, usually defined as the "matching cost", identifies a possible disparity value to be estimated for each pixel of the image. By way of example, these costs can be obtained by means of dissimilarity functions, according to which similar pixels will be assigned a low cost, or by means of similarity functions, according to which similar pixels will be assigned a high cost.

Furthermore, in the stereo case, the relationship between the depth $Z$ and the disparity $d$ is known:

$$Z = \frac{\text{Baseline} \cdot \text{Focal}}{d}$$

Therefore, the depth or depth $Z$ and the disparity $d$ are completely interchangeable, depending on the use scenario.

Therefore, said stereo matching algorithms are methods that allow to identify homologous pixels in the reference and target images and calculate the respective disparity map, which can be coded for display purposes, as a grayscale image, whose intensity corresponds to the calculated disparity. In this case, higher intensity values correspond to a shorter distance of the point from the camera and vice versa. Therefore, the depth information is contained in the brightness level of each pixel of the disparity map.

By way of simplification, the Semi Global Matching or SGM ([3]) algorithm is known among the stereovision or stereo matching algorithms, which is able to produce a disparity map of typically higher quality than the other traditional algorithms known in the literature ([4]).

In the light of what has been said, the stereo vision allows to generate disparity maps through the correspondence of the points of the two images, in which the above-mentioned value $d$ is associated with each pixel of the disparity map.

In recent years, deep learning techniques have been developed mainly based on convolutional neural networks (from the English "Convolutional Neural Networks" or CNN).

These convolutional neural networks currently represent the most effective solutions for determining the depth of the points in a scene from images.

More specifically, such neural networks are able to learn directly from images how to extract information from them, in order to classify them, and eliminating the need for manual extraction of features (from the English "features") from the same images.

Furthermore, convolutional neural networks can be re-trained for new recognition activities, to allow exploiting pre-existing networks.

In particular, in the context of determining the depth of the points in a scene from images, the use of these solutions has made it possible to achieve better results than those obtained by traditional stereo matching algorithms, such as the SGM algorithm quoted above.

The relevant prior art also comprises the patent document "CN 110021043A" and the non-patent literature Poggi et al.: "Guided Stereo Matching", 2019 IEEE/CVF Conference in Computer Vision and Pattern Recognition (CVPR), IEEE, 15 June 2019, pages 979-988, XP033687107.

However, a drawback of these known solutions is that they are less effective if used in environments other than those observed by the neural network during the learning or training phase, thus not allowing accurate results to be obtained in these different environments.

Therefore, the performances of these known solutions depend on the context in which they are used.

A further drawback of these known solutions is given by the fact that they are onerous in computational terms since they provide for the training of the entire neural network during the training phase for each iteration. Furthermore, they are implemented on bulky and/or high energy devices and typically involve long times to complete the training phase of the neural network.

**Scope of the invention**

In the light of the above, it is, therefore, an object of the present invention to provide a method for determining the depth of a scene from digital images by means of a stereo matching algorithm and a neural network, which allows increasing the accuracy in determining the depth from images in environments never observed or different from the training environments of such neural network.

In fact, as will be better described below, the automatic adaptation of the neural network with respect to the images acquired by the system reduces the need to have in advance the data necessary for training the network before its actual use.

Another object of the invention is to provide a method for determining the depth from images that can be used in various applications such as, for example, autonomous driving, artificial vision, robotics, and other applications, in which a 3D reconstruction is required.

Another object of the invention is to provide a method and a system, which are highly reliable, relatively simple to manufacture, and at competitive costs if compared to the prior art.

A further object of the present invention is to provide the tools necessary for carrying out the method and the apparatuses that carry out this method.

**Object of the invention**

It is therefore specific object of the present invention a method to determine the depth of a scene from at least one digital image of said scene, comprising the following steps: A. acquiring said at least one digital image of said scene; B. calculating a first disparity map from said at least one digital image, wherein said first disparity map consists of a matrix of pixels $p_{ij}$ with i=1,..,M and j=1,..,N, where i and j indicate respectively the line and column index of said first disparity map, and M and N are positive integers; C. calculating a second disparity map, by a neural network, from said at least one digital image; D. selecting a plurality of sparse depth data $S_{ij}$ relative to the respective pixel $p_{ij}$ of said first disparity map; E. extracting said plurality of sparse depth data $S_{ij}$ from said first disparity map; and F. optimizing said second disparity map by said plurality of sparse depth data $S_{ij}$, training at least one portion of said neural network with the information relative to said depth of said scene associated with said sparse depth data $S_{ij}$.

Advantageously according to the invention, said sparse depth data $S_{ij}$ may be depth punctual values of said scene relative to a set of said pixels $p_{ij}$ of said first disparity map.

Conveniently according to the invention, said step A may be carried out by an image detection unit comprising at least one image detection device for detecting said at least one digital image, said step B is carried out by a first processing unit, said step C is carried out by a second processing unit, and said step D is carried out by a filter, wherein each one of said first and second processing unit is connected to said image detection device and to said filter.

Still according to the invention, said first processing unit may be configured for calculating said first disparity map by a stereovision algorithm, and said second processing unit may be configured for calculating said second disparity map by said neural network.

Always according to the invention, said neural network may be a convolutional neural network, wherein said convolutional neural network comprises an extraction unit, configured for extracting a plurality of distinctive elements or features of said at least one digital image and a calculation unit configured for calculating respective disparity maps, associated to said features extracted by said extraction unit.

Further according to the invention, said extraction unit may comprise at least one module for extracting said respective features from said at least one digital image acquired by said image detection unit, and said calculation unit may comprise a module comprising in turn a plurality of convolutional filters, wherein said convolutional filters allow to calculate said respective disparity maps associated to said features.

Always according to the invention, said step A may be carried out by a stereo matching technique, so as to detect a reference image and a target image of said scene.

Preferably according to the invention, said convolutional neural network may further comprise a correlation module for correlating each pixel $p_{i,j}^{R}$ of said reference image with each pixel $p_{i,j}^{T}$ of said target image relative to each one of said features.

It is further form of the present invention a system to determine the depth of a scene from at least one digital image of said scene, comprising: an image detection unit configured for detecting said at least one digital image of said scene, and a processing unit, connected to said image detection unit, wherein said processing unit is configured for carrying out steps B-F of the method to determine the depth of a scene from at least one digital image of said scene.

Further according to the invention, said processing unit may comprise a first processing unit, connected to said image detection unit, and configured for producing a first disparity map from said at least one digital image, a second processing unit, connected to said image detection unit, and configured for producing a second disparity map, by a neural network, from said digital image, and a filter, connected to said first processing unit and a second processing unit, and configured for extracting a plurality of sparse depth data $S_{ij}$ from said first disparity map.

Still according to the invention, said sparse depth data $S_{ij}$ may be depth punctual values relative to a set of pixels $p_{ij}$ of said first disparity map, and said neural network may be a convolutional neural network.

Always according to the invention, said image detection unit may comprise at least one image detection device for detecting said at least one digital image.

Advantageously according to the invention, said first processing unit may produce said first disparity map by a stereovision algorithm implemented on a first hardware device, and said second processing unit may produce said second disparity map by said convolutional neural network implemented on a second hardware device.

Still according to the invention, said first hardware device is an *Field Programmabile Gate Array* (or FPGA) integrated circuit, and said second hardware device may be a *Graphics Processing Unit* (or GPU).

Always according to the invention, said convolutional neural network may comprise an extraction unit configured for extracting a plurality of distinctive elements or features of said at least one digital image, where said features comprise corners, curved segments and the like, relative to said scene, and a calculation unit configured for calculating respective disparity maps, associated to said features extracted by said extraction unit.

Conveniently according to the invention, said at least one image detection device may be a videocamera or a camera or a sensor capable of detecting depth data.

It is further object of the present invention a computer program comprising instructions that, when the program is executed by a computer, cause the execution of steps A-F of the method.

It is also objecto of the present invention a computer readable storage means comprising instructions that, when executed by a computer, cause the execution of method steps.

## Brief description of the figures

The present invention will be now described, for illustrative but not limitative purposes, according to its preferred embodiments, with particular reference to the figures of the enclosed drawings, wherein:

figure 1 shows, in a schematic view, an embodiment of the system for determining the depth from images, according to the present invention;
figure 2 shows a flow chart relating to the steps of the method for determining the depth from images, according to the present invention;
figure 3 shows a simplified schematic view of the system of figure 1;
figure 4 shows the application of a self-adaptive neural network to determine the depth from images, according to the method of figure 2; and
figure 5 shows a step of updating a portion of the neural network, according to figure 4.

In the various figures, similar parts will be indicated by the same reference numbers.

## Detailed description

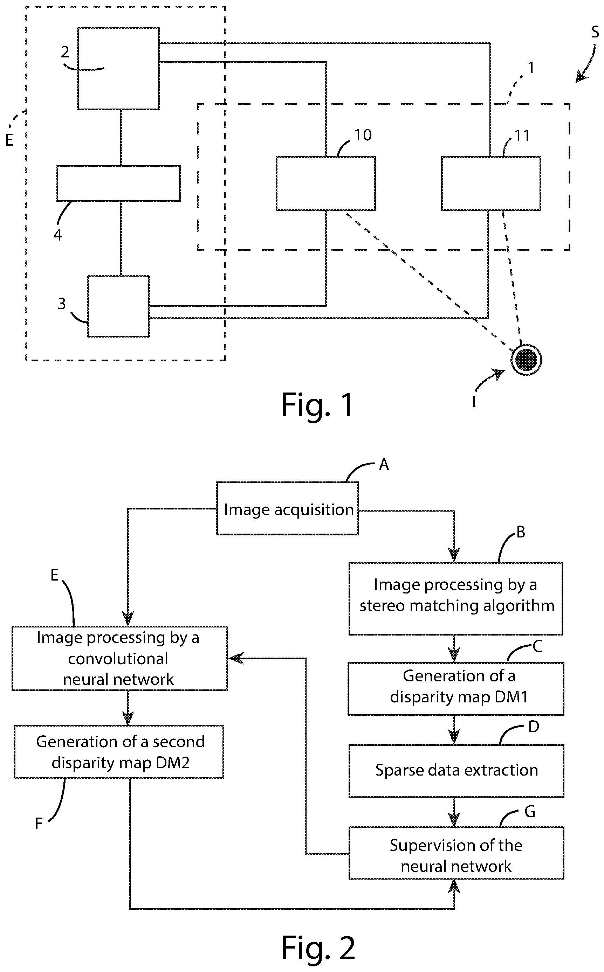

With reference to figure 1, the system for determining the depth of the points of a scene I from at least one digital image, globally indicated with the reference number S, comprises an image detection unit 1, and a processing unit E comprising a first processing unit 2, connected to said image detection unit 1, a second processing unit 3 connected to said image detection unit 1, and a filter 4, connected to said first processing unit 2 and to said second processing unit 3.

In the embodiment described, said image detection unit 1 is a stereoscopic vision system. However, in further embodiments of the present invention, said image detection unit 1 can be any prior art system capable of obtaining disparity or distance maps starting from digital images or other methods.

In particular, said image detection unit 1 comprises a first image detection device 10 and a second image detection device 11 such as, for example, a video camera, a camera, or a sensor, positioned at a predetermined fixed distance between them.

In further embodiments of the present invention, the image detection unit 1 can comprise a number of detection devices other than two, for example, one, as in monocular systems for estimating depth from images.

More in detail, as mentioned, each of said detection devices 10, 11 detects a respective image, or a reference image R or a target image T, of the observed object or scene I.

In the following description, the image acquired by means of said detection device 10 will be considered as the reference image or reference R, while the image acquired by means of said detection device 11 will be considered as the image of an objective or target T. However, as mentioned, each image acquired by the respective detection devices 10, 11 can be considered as a reference image R or target image T.

The first processing unit 2, as observed from figure 1, is connected to said detection devices 10, 11, and is configured to process the pair of stereo images R and T, acquired respectively by said detection device 10 and by said detection device 11, determining the depth of each point of the scene or object I observed by the imaging unit 1.

More in detail, said first processing unit 2 is capable of generating a first disparity map DM1 by means of a stereo vision algorithm, implemented, for example, on a first hardware device such as a Field Programmable Gate Array (or FPGA) integrated circuit.

In fact, such hardware architectures are characterized by low cost and low energy consumption, and high reliability.

However, in further embodiments of the present invention, said first processing unit 2 can provide for the use of further algorithms or programs or other sensors for a computer, capable of generating disparity maps.

In particular, this first disparity map DM1 is represented by an image consisting of a matrix of pixels $p_{ij}$ with i = 1,.., M and j = 1,.., N, where i and j respectively indicate the row and column index of said first disparity map DM1, and M and N are positive integers.

The second processing unit 3, similarly to what has been described above for said first processing unit 2, is also connected to said detection devices 10, 11.

In fact, also said second processing unit 3 is configured to process said stereo images R and T, acquired respectively by said detection device 10 and by the detection device 11, determining the depth of each point of the scene or object I observed by the image detection unit 1.

In particular, said second processing unit 3 is capable of generating a second disparity map DM2 by means of a convolutional neural network implemented on a second hardware device such as, for example, a graphics processing unit or Graphics Processing Unit (GPU) or other processing systems.

Similarly to what previously said for said first disparity map DM1, also said second disparity map DM2 is represented an image consisting of a pixel matrix $p'_{ij}$ with i = 1,.., M and j = 1,.., N, where i and j indicate respectively row and column index of said second disparity map DM2, and M and N are positive integers.

The convolutional neural network, as it is known, is a "feed-forward" type network, in which the information moves only in one direction (precisely forward), with respect to the input nodes. In particular, in the embodiment described, such a neural network is a supervised neural network, that is, it is trained to produce the desired outputs in response to external inputs.

In fact, as it will be better described below, the neural network automatically learns under the supervision of the stereoscopic system and accumulates sufficient experience to modify its parameters in such a way as to minimize the prediction error relating to the training phase.

More in detail, the neural network updates its knowledge of the surrounding environment by means of a set of data relating to the depth of the pixels of the scene I, extracted from said first disparity map DM1.

Therefore, said first processing unit 2 and said second processing unit 3 allow the generation of respective disparity maps DM1, DM2 starting from two hardware devices different from each other. This allows the two image processing processes to be carried out in parallel, and, as will be better described below, to provide in real-time, by said first processing unit 2, data relating to the depth of each pixel of the scene I to said second processing unit 3, thus continuously updating the neural network.

However, in other embodiments of the present invention, said first processing unit 2 and said second processing unit 3 can be implemented on the same hardware device.

The filter 4, connected between said first processing unit 2 and said second processing unit 3, is implemented on the same hardware device, on which the stereo vision algorithm is implemented, or on said first hardware device.

In particular, said filter 4 allows, by using known filtering algorithms, extracting from said first disparity map DM1 extremely accurate depth values or scattered data $S_{ij}$ of the scene I.

More specifically, these filtering algorithms include techniques to calculate the so-called confidence measures ([5]), or to extract information relating to the goodness or reliability of each pixel of the image, in this case of each pixel of said first disparity map DM1.

Therefore, these depth values, since they are extracted from a disparity map generated by a stereo matching algorithm, represent reliable and precise depth data relating to the environment observed by the imaging detecting unit 1.

Advantageously, as better described below, by selecting a subset of pixels $p_{ij}$ less than, or equal to that of the first disparity map DM1, it is possible to adapt the neural network to an environment different from the training environments of the same neural network.

With particular reference to figure 2, a flow chart of the method of determining the depth from images according to the present invention is observed.

In particular, the image acquisition step, indicated by the reference letter A, provides for the detection, by means of an image detection unit 1, of a reference image R and of a target image T.

Subsequently, in the step indicated by the reference letter B, said first processing unit 2 processes, by means of a stereo matching algorithm, the two previously acquired images R and T.

In the present embodiment, as mentioned, this image processing is carried out by means of a stereoscopic vision algorithm, however, a different sensor based on any technology or algorithm of the prior art capable of generating disparity maps starting from at least one image can be used.

Subsequently, in the step indicated with the reference letter C, said first processing unit 2 generates a first disparity map DM1, which can be displayed, for example, as an image with gray levels, in which the lighter areas correspond to the areas closest to the two detection devices 10, 11, while the darker areas correspond to the areas further away from the same detection devices 10, 11.

Subsequently, in the step indicated with the reference letter D, said filter 4 extracts a subset of data of the scattered data $S_{ij}$ starting from said first disparity map DM1.

Such scattered data $S_{ij}$ represent, as said, the punctual depth data of the scene I, relating to a set of pixels $p_{ij}$ of said first disparity map DM1.

In the step indicated with the reference letter E, said second processing unit 3 processes, by means of the convolutional neural network, the reference image R and the target image T, previously acquired by means of said image detection unit 1.

However, alternatively, the disparity map can be obtained by processing a single image. By way of example, monocular methods can be machine/deep-learning based.

Subsequently, in step F, said second processing unit 3 generates said second disparity map DM2, which can be used, as mentioned, also for autonomous driving, augmented reality, or robotics applications.

Finally, step G provides for the supervision of the neural network through the scattered data $S_{ij}$ obtained from the first disparity map DM1.

In fact, the parameters of the neural network are continuously updated, in order to adapt the same neural network to the environment related to the scene I.

More specifically, the convolutional neural network receives said scattered data $S_{ij}$ in real-time from said filter 4, and updates, at the next iteration, its weights and parameters on the basis of such scattered data $S_{ij}$ received from said filter 4. This allows the neural network to continuously improve the accuracy of said second disparity map DM2.

Therefore, this neural network is capable of adapting continuously and in real-time to the scenario under examination by exploiting the depth data obtained by the stereo algorithm, or by the active sensor used to obtain depth data.

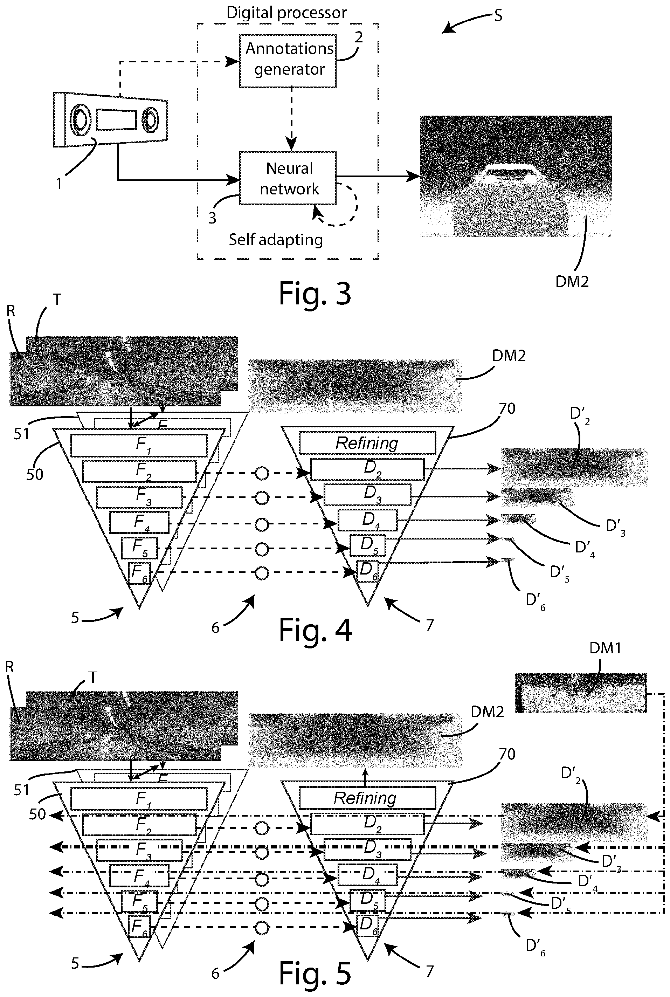

Figure 3, as already anticipated, shows a simplified operation diagram of the system S according to the present invention, in which a stereoscopic vision system 1 is represented connected to the two processing units 2, 3, which carry out the digital processing in parallel of the images coming from said stereoscopic system 1.

The output of said system S provides for the realization of said second disparity map DM2 obtained by means of said second processing unit 3.

Furthermore, as anticipated, the processing of the images acquired by means of the image detection unit 1 can also be performed directly on said detection unit 1 (in this case it is referred to "on-board data processing").

With particular reference to figure 4, in the embodiment that is described, the convolutional neural network has a pyramidal architecture and comprises a configured feature extraction unit 5 or extraction unit 5 to extract a plurality of features $F_2$, $F_3$, $F_4$, $F_5$, $F_6$ starting from the images R, T, and a disparity map processing unit 6 or second unit 7 configured to calculate respective disparity maps $D'_2$, $D'_3$, $D'_4$, $D'_5$, $D'_6$ associated with said features $F_2$, $F_3$, $F_4$, $F_5$, $F_6$ extracted from said unit 5. By way of example, in the case at issue, in order to speed up the processing of the data, the last calculated disparity map is said disparity map $D'_2$, that is the disparity map calculated starting from said feature $F_2$, therefore at one-quarter of the original resolution.

In particular, said unit 5 comprises two modules 50, 51 having a multilevel pyramid structure for processing the respective images R, T acquired by the image detection unit 1.

More in detail, in the embodiment described, each of said modules 50, 51 extracts six features, i.e. the features that the convolutional neural network intends to identify.

These features, in fact, are the characteristic elements of the image associated with the scene or object I, whose depth it is intended to determine, for each pixel.

By way of example, the most used features include edges, corners, curved segments, circles, ellipses, and region descriptors.

In particular, as can be seen in figure 4, each of said modules 50, 51 extracts, respectively, from each of said images R, T, a plurality of features $F_1$, $F_2$, $F_3$, $F_4$, $F_5$, $F_6$.

Moreover, said convolutional neural network further comprises a correlation module or level 6 to obtain matching costs by correlating each pixel $p_{i,j}^R$ of the image R with each corresponding pixel $p_{i,j}^T$ of the image T associated with the respective feature extracted from unit 5.

In fact, in the present invention, a subset of said features $F_1$, $F_2$, $F_3$, $F_4$, $F_5$, $F_6$, corresponding to the features $F_2$, $F_3$, $F_4$, $F_5$, $F_6$, for each of said images R, T, is processed by means of said correlation level 6 to obtain respective matching costs, i.e. the scores between each pixel in the reference image R and the possible couplings or matches in the target image T.

Therefore, as mentioned, these matching costs are obtained through the correlation between each pixel of the image R and the corresponding pixels of the target image T.

Said unit 7 comprises a module 70 for calculating, by means of blocks of convolutional filters $D_2$, $D_3$, $D_4$, $D_5$, $D_6$, respective disparity maps $D_2'$, $D_3'$, $D_4'$, $D_5'$, $D_6'$.

In other words, said module 70 estimates the disparity maps starting from the lowest resolutions, such as the disparity map, up to the disparity maps relating to the highest resolutions, i.e. the disparity maps $D_5' - D_2'$.

Therefore, the convolutional neural network allows to reduce, by means of convolutional filters, the resolution of said images R, T in input to the two modules 50, 51.

Furthermore, this module 70 further comprises a finishing process, carried out, for example, by means of dilated convolutions, or convolution operations with dilated filters. This is equivalent to dilating the filters (i.e. increasing their size by filling empty positions with zeros) before carrying out the convolution.

The output of said module 70 corresponds to the output of the convolutional neural network, from which said second disparity map DM2 originates.

With particular reference to figure 5, the supervision step G of the neural network is observed in detail by means of the set of scattered data obtained from the first disparity map DM1.

More in detail, the supervision of the convolutional neural network is carried out at the different resolutions, that is for the respective disparity maps $D_2'$, $D_3'$, $D_4'$, $D_5'$, $D_6'$ previously calculated by the respective blocks of convolutional filters $D_2$, $D_3$, $D_4$, $D_5$, $D_6$ of the same neural network.

In fact, the neural network updates its parameters according to the depth information coming from said first processing unit 2 and associated with said first disparity map DM1.

Furthermore, as can be seen from figure 5, the system S according to the present invention allows updating distinct portions of the neural network by dividing the training of the same neural network for each disparity map $D_2'$, $D_3'$, $D_4'$, $D_5'$, $D_6'$ obtained at a given resolution.

More specifically, the supervision of the convolutional neural network carried out by means of the scattered data $S_{ij}$ extracted from said first disparity map DM1 allows updating distinct portions of the same neural network, thus reducing the computational load required for updating the weights of the neural network.

In particular, the portion of the neural network to be updated can be selected, for example, by means of the round-robin technique or other known techniques.

Figure 5 shows, with reference to the present embodiment, the updating of a single portion of the neural network, in particular of the portion associated with the disparity map $D_3'$, and, therefore, with the feature $F_3$.

However, in further embodiments of the present invention, this update can be applied to other portions of the same neural network.

In a further embodiment of the present invention, said system S according to the present invention comprises a stereovision system equipped with active sensors such as, for example, sensors based on LiDAR technology (from the English "Light Detection and Ranging" or "Laser Imaging Detection and Ranging") or radar, or by means of remote sensing techniques, that allow determining the distance to an object or surface using laser pulses or any other technology capable of generating depth information.

**Advantages**

A first advantage of the present invention is that of realizing a neural network capable of self-adapting to real environments never observed before or different from the environments in which the same neural network has been trained. The present invention, in fact, contrary to the known systems, depends only partially on the training phase of the neural network.

Another advantage of the present invention is that of selecting and updating a single portion of the neural network, limiting the single iteration of adaptation only to this portion and thus reducing the calculation times.

A further advantage of the present invention is that of being able to perform image processing both "on-board", i.e. directly on the stereoscopic camera and on other external hardware devices.

Another advantage of the present invention is that it can be used in various applications such as, for example, autonomous driving, artificial vision, robotics, and 3D reconstruction.

The present invention has been described for illustrative but not limitative purposes, according to its preferred embodiments, but it is to be understood that modifications and/or changes can be introduced by those skilled in the art without departing from the scope of the appended claims.

**References**

[1] Loop, Charles, and Zhengyou Zhang. "Computing rectifying homographies for stereo vision." Proceedings. 1999 IEEE Computer Society Conference on Computer Vision and Pattern Recognition (Cat. No PR00149). Vol. 1. IEEE, 1999;

[2] Bradski, Gary, and Adrian Kaehler. Learning OpenCV: Computer vision with the OpenCV library. " O'Reilly Media, Inc.", 2008;

[3] Hirschmuller, Heiko. "Stereo processing by semiglobal matching and mutual information." IEEE Transactions on pattern analysis and machine intelligence 30.2 (2007): 328-341;

[4] Scharstein, Daniel, and Richard Szeliski. "A taxonomy and evaluation of dense two-frame stereo correspondence algorithms." International journal of computer vision 47.1-3 (2002): 7-42;

[5] Poggi, Matteo, Fabio Tosi, and Stefano Mattoccia. "Quantitative evaluation of confidence measures in a machine learning world." Proceedings of the IEEE International Conference on Computer Vision. 2017.

**Claims**

1. Method to determine the depth of a scene (I) from at least one digital image (R, T) of said scene (I), comprising the following steps:

   A. acquiring said at least one digital image (R, T) of said scene (I);
   B. calculating a first disparity map (DM1) from said at least one digital image (R, T), wherein said first disparity map (DM1) consists of a matrix of pixels $p_{ij}$ with i=1,..,M and j=1,..,N, where i and j indicate respectively the line and column index of said first disparity map (DM1), and M and N are positive integers;
   C. calculating a second disparity map (DM2), by a neural network, from said at least one digital image (R, T);
   D. selecting a plurality of sparse depth data $S_{ij}$ relative to the respective pixel $p_{ij}$ of said first disparity map (DM1);
   E. extracting said plurality of sparse depth data $S_{ij}$ from said first disparity map (DM1); and
   F. optimizing said second disparity map (DM2) by said plurality of sparse depth data $S_{ij}$, training

   at least one portion of said neural network with the information relative to said depth of said scene (I) associated with said sparse depth data $S_{ij}$,
   said step A is carried out by an image detection unit (1) comprising at least one image detection device (10, 11) for detecting said at least one digital image (R, T),
   said step B is carried out by a first processing unit (2),
   said step C is carried out by a second processing unit (3), and
   said step D is carried out by a filter (4),
   wherein each one of said first (2) and second (3) processing unit is connected to said image detection device (1) and to said filter (4);
   wherein said first processing unit (2) is configured for calculating said first disparity map (DM1) by a stereovision algorithm, and
   wherein said second processing unit (3) is configured for calculating said second disparity map (DM2) by said neural network,
   wherein said neural network is a convolutional neural network,
   wherein said convolutional neural network comprises

   an extraction unit (5), configured for extracting a plurality of distinctive elements or features ($F_2$, $F_3$, $F_4$, $F_5$, $F_6$) of said at least one digital image (R, T), and
   a calculation unit (7) configured for calculating respective disparity maps ($D'_2$, $D'_3$, $D'_4$, $D'_5$, $D'_6$), associated to said features ($F_2$, $F_3$, $F_4$, $F_3$, $F_6$) extracted by said extraction unit (5)

   **characterized**
   **in that** said extraction unit (5) comprises at least one module (50, 51) for extracting said respective features ($F_2$, $F_3$, $F_4$, $F_5$, $F_6$) from said at least one digital image (R, T) acquired by said image detection unit (1), and
   **in that** said calculation unit (6) comprises a module (60) comprising in turn a plurality of convolutional filters ($D_2$, $D_3$, $D_4$, $D_5$, $D_6$),
   wherein said convolutional filters ($D_2$, $D_3$, $D_4$, $D_5$, $D_6$) allow to calculate said respective disparity maps ($D'_2$, $D'_3$, $D'_4$, $D'_5$, $D'_6$) associated to said features ($F_2$, $F_3$, $F_4$, $F_5$, $F_6$).

2. Method according to the preceding claim, **characterized in that** said sparse depth data $S_{ij}$ are depth punctual values of said scene (I) relative to a set of said pixels $p_{ij}$ of said first disparity map (DM1).

3. Method according to any one of the preceding claims, **characterized in that** said step A is carried out by a stereo matching technique, so as to detect a reference image (R) and a target image (T) of said scene (I).

4. Method according to the preceding claim, when dependent on claim 5, **characterized in that** said convolutional neural network further comprises a correlation module (6) for correlating each pixel $p_{i,j}^R$ of said reference image (R) with each pixel $p_{i,j}^T$ of said target image (T) relative to each one of said features ($F_2$, $F_3$, $F_4$, $F_5$, $F_6$).

5. System (S) to determine the depth of a scene (I) from at least one digital image (R, T) of said scene (I), comprising:

   an image detection unit (1) configured for detecting said at least one digital image (R, T) of said scene (I), and
   a processing unit (E), connected to said image detection unit (1),
   wherein said processing unit (E) is configured for carrying out steps B-F of the method to determine the depth of a scene (I) from at least one digital image (R, T) of said scene (I) according any one of claims 1-4,

   wherein

   said processing unit (E) comprises
   a first processing unit (2), connected to said image detection unit (1), and configured for producing a first disparity map (DM1) from said at least one digital image (R, T),
   a second processing unit (3), connected to said image detection unit (1), and configured for producing a second disparity map (DM2), by a neural network, from said digital image (R, T), and
   a filter (4), connected to said first processing unit (2) and a second processing unit (3), and configured for extracting a plurality of sparse depth data $S_{ij}$ from said first disparity map (DM1), wherein
   said sparse depth data $S_{ij}$ are depth punctual values (I) relative to a set of pixels $p_{ij}$ of said first disparity map (DM1), and
   said neural network is a convolutional neural network comprising
   an extraction unit (5) configured for extracting a plurality of distinctive elements or features ($F_2$, $F_3$, $F_4$, $F_5$, $F_6$) of said at least one digital image (R, T), where said features comprise corners, curved segments and the like, relative to said scene (I), and
   a calculation unit (7) configured for calculating respective disparity maps ( $D_2'$, $D_3'$, $D_4'$, $D_5'$, $D_6'$ ), associated to said features ($F_2$, $F_3$, $F_4$, $F_5$, $F_6$) extracted by said extraction unit (5).

6. System (S) according to the preceding claim, **characterized in that** said image detection unit (1) comprises at least one image detection device (10, 11) for detecting said at least one digital image (R, T).

7. System (S) according to any one of claims 5 or 6, **characterized**

   **in that** said first processing unit (2) produces said first disparity map (DM1) by a stereovision algorithm implemented on a first hardware device, and
   **in that** said second processing unit (3) produces said second disparity map (DM2) by said convolutional neural network implemented on a second hardware device.

8. System (S) according to the preceding claim, **characterized**

   **in that** said first hardware device is an *Field Programmabile Gate Array* (or FPGA) integrated circuit, and
   **in that** said second hardware device is a *Graphics Processing Unit* (or GPU).

9. System (S) according to any one of claims 5-8, **characterized in that** said at least one image detection device (10, 11) is a videocamera or a camera or a sensor capable of detecting depth data.

10. Computer program comprising instructions that, when the program is executed by a computer, cause the execution of steps A-F of the method according any one of claims 1-4 by the computer.

11. Computer readable storage means comprising instructions that, when executed by a computer, cause the execution of method steps according to any one of claims 1-4 by the computer.

**Patentansprüche**

1. Verfahren zur Bestimmung der Tiefe einer Szene (I) anhand mindestens eines digitalen Bildes (R, T) dieser Szene (I), das die folgenden Schritte umfasst:

   A. Erfassen des mindestens einen digitalen Bildes (R, T) der Szene (I);
   B. Berechnen einer ersten Disparitätskarte (DM1) aus dem mindestens einen digitalen Bild (R, T), wobei die erste Disparitätskarte (DM1) aus einer Matrix von Pixeln $p_{ij}$ mit i=1, .. ,M und j=1, .. ,N, wobei i und j den Zeilen- bzw. Spaltenindex der ersten Disparitätskarte (DM1) bezeichnen und M und N positive ganze Zahlen sind;

C. Berechnen einer zweiten Disparitätskarte (DM2) durch ein neuronales Netz aus dem mindestens einen digitalen Bild (R, T);

D. Auswählen einer Vielzahl von spärlichen Tiefendaten $S_{ij}$ relativ zu dem jeweiligen Pixel $p_{ij}$ der ersten Disparitätskarte (DM1);

E. Extrahieren der Vielzahl von spärlichen Tiefendaten $S_{ij}$ aus der ersten Disparitätskarte (DM1); und

F. Optimieren der zweiten Disparitätskarte (DM2) durch die Vielzahl von spärlichen Tiefendaten $S_{ij}$, Trainieren mindestens eines Teils des neuronalen Netzes mit der Information bezüglich der Tiefe der Szene (I), die mit den spärlichen Tiefendaten $S_{ij}$ verbunden ist, der Schritt A durch eine Bilderfassungseinheit (1) ausgeführt wird, die mindestens eine Bilderfassungsvorrichtung (10, 11) zur Erfassung des mindestens einen digitalen Bildes (R, T) umfasst, der Schritt B wird von einer ersten Verarbeitungseinheit (2) ausgeführt, der Schritt C von einer zweiten Verarbeitungseinheit (3) ausgeführt wird, und der Schritt D wird von einem Filter (4) ausgeführt, wobei jede der ersten (2) und zweiten (3) Verarbeitungseinheiten mit der Bilderfassungsvorrichtung (1) und dem Filter (4) verbunden ist; wobei die erste Verarbeitungseinheit (2) zum Berechnen der ersten Disparitätskarte (DM1) durch einen Stereovisionsalgorithmus konfiguriert ist, und wobei die zweite Verarbeitungseinheit (3) für die Berechnung der zweiten Disparitätskarte (DM2) durch das neuronale Netz konfiguriert ist, wobei das neuronale Netz ein neuronales Faltungsnetz ist, wobei das neuronale Faltungsnetzwerk Folgendes umfasst eine Extraktionseinheit (5), die zum Extrahieren einer Vielzahl von unterscheidbaren Elementen oder Merkmalen ($F_2$, $F_3$, $F_4$, $F_5$, $F_6$) des mindestens einen digitalen Bildes (R, T) konfiguriert ist, und eine Berechnungseinheit (7), die zum Berechnen entsprechender Disparitätskarten (D'$_2$, D'$_3$, D'$_4$, D'$_5$, D'$_6$), die den Merkmalen ($F_2$, $F_3$, $F_4$, $F_5$, $F_6$) zugeordnet sind, die durch die Extraktionseinheit (5) extrahiert wurden **dadurch gekennzeichnet, dass** die Extraktionseinheit (5) mindestens ein Modul (50, 51) zum Extrahieren der jeweiligen Merkmale ($F_2$, $F_3$, $F_4$, $F_5$, $F_6$) aus dem mindes-

tens einen digitalen Bild (R, T) umfasst, das von der Bilderfassungseinheit (1) erfasst wurde, und **dass** die Berechnungseinheit (6) ein Modul (60) umfasst, das seinerseits eine Vielzahl von Faltungsfiltern ($D_2$, $D_3$, $D_4$, $D_5$, $D_6$) umfasst, wobei die Faltungsfilter ($D_2$, $D_3$, $D_4$, $D_5$, $D_6$) die Berechnung der jeweiligen Disparitätskarten (D'$_2$, D'$_3$, D'$_4$, D'$_5$, D'$_6$), die den Merkmalen ($F_2$, $F_3$, $F_4$, $F_5$, $F_6$) zugeordnet sind.

2. Verfahren nach dem vorhergehenden Anspruch, **dadurch gekennzeichnet, dass** die spärlichen Tiefendaten $S_{ij}$ punktuelle Tiefenwerte der Szene (I) relativ zu einem Satz der Pixel $p_{ij}$ der ersten Disparitätskarte (DM1) sind.

3. Verfahren nach einem der vorhergehenden Ansprüche, **dadurch gekennzeichnet, dass** der Schritt A durch eine Stereo-Matching-Technik durchgeführt wird, um ein Referenzbild (R) und ein Zielbild (T) der Szene (I) zu erfassen.

4. Verfahren nach dem vorhergehenden Anspruch, wenn es von Anspruch 5 abhängt, **dadurch gekennzeichnet, dass** das neuronale Faltungsnetzwerk außerdem ein Korrelationsmodul (6) umfasst, um jedes Pixel $p^R_{i,j}$ des Referenzbildes (R) mit jedem Pixel $p^T_{i,j}$ des Zielbildes (T) in Bezug auf jedes der Merkmale ($F_2$, $F_3$, $F_4$, $F_5$, $F_6$) zu korrelieren.

5. System (S) zur Bestimmung der Tiefe einer Szene (I) aus mindestens einem digitalen Bild (R, T) der Szene (I), umfassend:

eine Bilderfassungseinheit (1), die zum Erfassen des mindestens einen digitalen Bildes (R, T) der Szene (I) konfiguriert ist, und eine Verarbeitungseinheit (E), die mit der Bilderfassungseinheit (1) verbunden ist, wobei die Verarbeitungseinheit (E) zur Durchführung der Schritte B-F des Verfahrens zur Bestimmung der Tiefe einer Szene (I) aus mindestens einem digitalen Bild (R, T) der Szene (I) nach einem der Ansprüche 1-4 ausgebildet ist, wobei die Verarbeitungseinheit (E) umfasst eine erste Verarbeitungseinheit (2), die mit der Bilderfassungseinheit (1) verbunden ist und zum Erzeugen einer ersten Disparitätskarte (DM1) aus dem mindestens einen digitalen Bild (R, T) konfiguriert ist, eine zweite Verarbeitungseinheit (3), die mit der Bilderfassungseinheit (1) verbunden ist und so konfiguriert ist, dass sie eine zweite Disparitätskarte (DM2) durch ein neuronales Netz aus dem digitalen Bild (R, T) erzeugt, und
ein Filter (4), das mit der ersten Verarbeitungseinheit (2) und einer zweiten Verarbeitungseinheit (3) verbunden und zum Extrahieren einer Vielzahl von spärlichen Tiefendaten $S_{ij}$ aus der ersten Disparitätskarte (DM1) konfiguriert ist, wobei die spärlichen Tiefendaten $S_{ij}$ Tiefenpunktwerte (I) relativ zu einem Satz von Pixeln $p_{ij}$ der ersten Disparitätskarte (DM1) sind, und Das neuronale Netz ist ein neuronales Faltungsnetz mit eine Extraktionseinheit (5), die so konfiguriert ist, dass sie eine Vielzahl von charakteristischen Elementen oder Merkmalen ($F_2, F_3, F_4, F_5, F_6$) des mindestens einen digitalen Bildes (R, T) extrahiert, wobei die Merkmale Ecken, gekrümmte Segmente und dergleichen in Bezug auf die Szene (I) umfassen, und eine Berechnungseinheit (7), die zum Berechnen entsprechender Disparitätskarten ($D'_2, D'_3, D'_4, D'_5, D'_6$), die den Merkmalen ($F_2, F_3, F_4, F_5, F_6$) zugeordnet sind, die durch die Extraktionseinheit (5) extrahiert wurden.

6. System (S) nach dem vorhergehenden Anspruch, **dadurch gekennzeichnet, dass** die Bilderfassungseinheit (1) mindestens eine Bilderfassungsvorrichtung (10, 11) zur Erfassung des mindestens einen digitalen Bildes (R, T) umfasst.

7. System (S) gemäß einem der Ansprüche 5 oder 6, gekennzeichnet

   dass die erste Verarbeitungseinheit (2) die erste Disparitätskarte (DM1) durch einen Stereovisionsalgorithmus erzeugt, der in einer ersten Hardwarevorrichtung implementiert ist, und
   dass die zweite Verarbeitungseinheit (3) die zweite Disparitätskarte (DM2) durch das auf einer zweiten Hardwarevorrichtung implementierte neuronale Faltungsnetzwerk erzeugt.

8. System (S) gemäß dem vorstehenden Anspruch, gekennzeichnet

   dass die erste Hardware-Vorrichtung eine *Field Programmabile Gate Array* (oder FPGA) integrierte Schaltung ist, und
   dass die zweite Hardwarevorrichtung eine *Grafikverarbeitungseinheit (*oder GPU) ist.

9. System (S) gemäß einem der Ansprüche 5-8, gekennzeichnet
   dass die mindestens eine Bilderfassungsvorrichtung (10, 11) eine Videokamera oder eine Kamera oder ein Sensor ist, der in der Lage ist, Tiefendaten zu erfassen.

10. Computerprogramm, das Anweisungen umfasst, die, wenn das Programm von einem Computer ausgeführt wird, die Ausführung der Schritte A-F des Verfahrens gemäß einem der Ansprüche 1-4 durch den Computer bewirken.

11. Computerlesbares Speichermedium, das Anweisungen umfasst, die, wenn sie von einem Computer ausgeführt werden, die Ausführung der Verfahrensschritte gemäß einem der Ansprüche 1-4 durch den Computer bewirken.

## Revendications

1. Procédé permettant de déterminer la profondeur d'une scène (I) à partir d'au moins une image numérique (R, T) de ladite scène (I), comprenant les étapes suivantes:

   A. acquérir ladite au moins une image numérique (R, T) de ladite scène (I);
   B. calcul d'une première carte de disparité (DM1) à partir de ladite au moins une image numérique (R, T), dans laquelle ladite première carte de disparité (DM1) consiste en une matrice de pixels $p_{ij}$ avec i=1, .. ,M et j=1, .. ,N, où i et j indiquent respectivement l'indice de ligne et de colonne de la première carte de disparité (DM1), et M et N sont des nombres entiers positifs;
   C. calcul d'une deuxième carte de disparité (DM2), par un réseau neuronal, à partir de ladite au moins une image numérique (R, T);
   D. sélection d'une pluralité de données de profondeur éparses $S_{ij}$ par rapport au pixel respectif $p_{ij}$ de ladite première carte de disparité (DM1);
   E. extraire ladite pluralité de données de profondeur éparses $S_{ij}$ de ladite première carte de disparité (DM1); et
   F. optimiser ladite deuxième carte de disparité (DM2) par ladite pluralité de données de profondeur éparses $S_{ij}$, en entraînant au moins une partie dudit réseau neuronal avec les informations relatives à ladite profondeur de ladite scène (I) associées auxdites données de profondeur éparses $S_{ij}$,
   ladite étape A est réalisée par une unité de détection d'images (1) comprenant au moins un dispositif de détection d'images (10, 11) pour détecter ladite au moins une image numérique (R, T),
   cette étape B est réalisée par une première unité de traitement (2),
   ladite étape C est effectuée par une deuxième unité de traitement (3), et
   cette étape D est réalisée par un filtre (4),
   dans laquelle chacune de ces première (2) et deuxième (3) unités de traitement est connectée au dispositif de détection d'images (1) et au filtre (4); dans laquelle ladite première unité de traitement (2) est configurée pour calculer ladite première carte de disparité (DM1) au moyen d'un algorithme de stéréovision, et

dans laquelle ladite deuxième unité de traitement (3) est configurée pour calculer ladite deuxième carte de disparité (DM2) à l'aide dudit réseau neuronal,

dans lequel ledit réseau neuronal est un réseau neuronal convolutif,

dans lequel ledit réseau neuronal convolutif comprend une unité d'extraction (5), configurée pour extraire une pluralité d'éléments ou de caractéristiques distinctifs ($F_2$, $F_3$, $F_4$, $F_5$, $F_6$) de ladite au moins une image numérique (R, T), et

une unité de calcul (7) configurée pour calculer les cartes de disparité respectives (D'$_2$, D'$_3$, D'$_4$, D'$_5$, D'$_6$), associées auxdites caractéristiques ($F_2$, $F_3$, $F_4$, $F_5$, $F_6$) extraites par ladite unité d'extraction (5) **caractérisée en ce que**

**en ce que** ladite unité d'extraction (5) comprend au moins un module (50, 51) pour extraire lesdites caractéristiques respectives ($F_2$, $F_3$, $F_4$, $F_5$, $F_6$) de ladite au moins une image numérique (R, T) acquise par ladite unité de détection d'images (1), et

**en ce que** ladite unité de calcul (6) comprend un module (60) comprenant à son tour une pluralité de filtres convolutifs ($D_2$, $D_3$, $D_4$, $D_5$, $D_6$),

dans lequel lesdits filtres convolutifs ($D_2$, $D_3$, $D_4$, $D_5$, $D_6$) permettent de calculer lesdites cartes de disparité respectives (D'$_2$, D'$_3$, D'$_4$, D'$_5$, D'$_6$) associées auxdites caractéristiques ($F_2$, $F_3$, $F_4$, $F_5$, $F_6$).

2. Procédé selon la revendication précédente, **caractérisé en ce que** lesdites données de profondeur éparses $S_{ij}$ sont des valeurs ponctuelles de profondeur de ladite scène (I) par rapport à un ensemble desdits pixels $p_{ij}$ de ladite première carte de disparité (DM1).

3. Procédé selon l'une quelconque des revendications précédentes, **caractérisé en ce que** ladite étape A est réalisée par une technique de correspondance stéréo, de manière à détecter une image de référence (R) et une image cible (T) de ladite scène (I).

4. Procédé selon la revendication précédente, lorsqu'il dépend de la revendication 5, **caractérisé en ce que** ledit réseau neuronal convolutif comprend en outre un module de corrélation (6) pour corréler chaque pixel $p_{i,j}^{R}$, de ladite image de référence (R) avec chaque pixel $p_{i,j}^{T}$, de ladite image cible (T) par rapport à chacune desdites caractéristiques ($F_2$, $F_3$,

$F_4$, $F_5$, $F_6$).

5. Système (S) pour déterminer la profondeur d'une scène (I) à partir d'au moins une image numérique (R, T) de ladite scène (I), comprenant:

une unité de détection d'images (1) configurée pour détecter ladite au moins une image numérique (R, T) de ladite scène (I), et

une unité de traitement (E), connectée à l'unité de détection d'images (1),

dans lequel ladite unité de traitement (E) est configurée pour exécuter les étapes B-F de la méthode de détermination de la profondeur d'une scène (I) à partir d'au moins une image numérique (R, T) de ladite scène (I) selon l'une quelconque des revendications 1-4,

dans lequel

ladite unité de traitement (E) comprend une première unité de traitement (2), connectée à ladite unité de détection d'images (1), et configurée pour produire une première carte de disparité (DM1) à partir de ladite au moins une image numérique (R, T),

une deuxième unité de traitement (3), connectée à ladite unité de détection d'images (1), et configurée pour produire une deuxième carte de disparité (DM2), par un réseau neuronal, à partir de ladite image numérique (R, T), et

un filtre (4), connecté à ladite première unité de traitement (2) et à une seconde unité de traitement (3), et configuré pour extraire une pluralité de données de profondeur éparses $S_{ij}$ de ladite première carte de disparité (DM1), dans laquelle lesdites données de profondeur éparses $S_{ij}$ sont des valeurs ponctuelles de profondeur (I) relatives à un ensemble de pixels $p_{ij}$ de ladite première carte de disparité (DM1), et

ledit réseau neuronal est un réseau neuronal convolutif comprenant

une unité d'extraction (5) configurée pour extraire une pluralité d'éléments ou de caractéristiques distinctifs ($F_2$, $F_3$, $F_4$, $F_5$, $F_6$) de ladite au moins une image numérique (R, T), lesdites caractéristiques comprenant des coins, des segments incurvés et autres, par rapport à ladite scène (I), et

une unité de calcul (7) configurée pour calculer les cartes de disparité respectives (D'$_2$, D'$_3$, D'$_4$, D'$_5$, D'$_6$), associées auxdites caractéristiques ($F_2$, $F_3$, $F_4$, $F_5$, $F_6$) extraites par ladite unité d'extraction (5).

6. Système (S) selon la revendication précédente, **caractérisé en ce que** ladite unité de détection d'images (1) comprend au moins un dispositif de détection d'images (10, 11) pour détecter ladite au moins une image numérique (R, T).

7. Système (S) selon l'une quelconque des revendications 5 ou 6, caractérisé

   ladite première unité de traitement (2) produit ladite première carte de disparité (DM1) au moyen d'un algorithme de stéréovision mis en œuvre sur un premier dispositif matériel, et la deuxième unité de traitement (3) produit la deuxième carte de disparité (DM2) à l'aide du réseau neuronal convolutif mis en œuvre sur un deuxième dispositif matériel.

8. Système (S) selon la revendication précédente, **caractérisé**

   **en ce que** ledit premier dispositif matériel est un circuit intégré *Field Programmabile Gate Array* (ou FPGA), et
   **en ce que** ledit deuxième dispositif matériel est une *Graphics Processing Unit (*ou GPU).

9. Système (S) selon l'une quelconque des revendications 5-8, caractérisé dans la mesure où ledit au moins un dispositif de détection d'images (10, 11) est une caméra vidéo ou une caméra ou un capteur capable de détecter des données de profondeur.

10. Programme informatique comprenant des instructions qui, lorsque le programme est exécuté par un ordinateur, provoquent l'exécution des étapes A-F du procédé selon l'une quelconque des revendications 1-4 par l'ordinateur.

11. Support de stockage lisible par ordinateur comprenant des instructions qui, lorsqu'elles sont exécutées par un ordinateur, provoquent l'exécution des étapes de procédé selon l'une quelconque des revendications 1-4 par l'ordinateur.

Fig. 1

Fig. 2

Digital processor

Annotations generator — 2

Neural network

1

3

Self adapting

S

DM2

## Fig. 3

R T

DM2

51

50

70

$F_1$

$F_2$

$F_3$

$F_4$

$F_5$

$F_6$

$E$

Refining

$D_2$

$D_3$

$D_4$

$D_5$

$D_6$

$D'_2$

$D'_3$

$D'_4$

$D'_5$

$D'_6$

5

6

7

## Fig. 4

R T

DM2

DM1

51

50

70

$F_1$

$F_2$

$F_3$

$F_4$

$F_5$

$F_6$

$E$

Refining

$D_2$

$D_3$

$D_4$

$D_5$

$D_6$

$D'_2$

$D'_3$

$D'_4$

$D'_5$

$D'_6$

5

6

7

## Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110021043 A

**Non-patent literature cited in the description**

- Guided Stereo Matching. **POGGI et al.** 2019 IEEE/CVF Conference in Computer Vision and Pattern Recognition. IEEE, 15 June 2019, 979-988
- Computing rectifying homographies for stereo vision. **LOOP, CHARLES** ; **ZHENGYOU ZHANG**. Proceedings. 1999 IEEE Computer Society Conference on Computer Vision and Pattern Recognition. IEEE, 1999, vol. 1
- **BRADSKI, GARY** ; **ADRIAN KAEHLER**. Learning OpenCV: Computer vision with the OpenCV library. O'Reilly Media, Inc., 2008
- **HIRSCHMULLER, HEIKO**. Stereo processing by semiglobal matching and mutual information. *IEEE Transactions on pattern analysis and machine intelligence*, 2007, vol. 30 (2), 328-341
- **SCHARSTEIN, DANIEL** ; **RICHARD SZELISKI**. A taxonomy and evaluation of dense two-frame stereo correspondence algorithms. *International journal of computer vision*, 2002, vol. 47 (1-3), 7-42
- **POGGI, MATTEO** ; **FABIO TOSI** ; **STEFANO MATTOCCIA**. Quantitative evaluation of confidence measures in a machine learning world. *Proceedings of the IEEE International Conference on Computer Vision*, 2017